# EUROPEAN PATENT SPECIFICATION

(11) **EP 3 134 852 B1**
(45) Date of publication and mention of the grant of the patent: **22.08.2018**
(21) Application number: 15715412.1
(22) Date of filing: 25.02.2015
(51) Int. Cl.: G06K 19/06, G06K 19/02

(54) **METHODOLOGY FOR THE TRACEABILITY OF LEATHER-LIKE AND LEATHER MATERIALS IN INDUSTRIAL PROCESSES**
VERFAHREN FÜR DIE VERFOLGBARKEIT VON LEDERÄHNLICHEN UND LEDERMATERIALIEN IN INDUSTRIELLEN PROZESSEN
MÉTHODOLOGIE DE TRAÇABILITÉ DE MATÉRIAUX EN CUIR ET SIMILAIRES À DU CUIR DANS DES PROCESSUS INDUSTRIELS

(30) Priority: 22.04.2014 IT BA20140025
(43) Date of publication of application: 01.03.2017
(73) Proprietor: Advanced Engineering Solutions S.r.l., 73048 Nardo (LE) (IT); Monitech S.r.l. - Monitoring Technologies, 73100 Lecce (IT)
(72) Inventor: CATALDO, Andrea Maria, 73100 Lecce (IT); GRIECO, Antonio Domenico, 73100 Lecce (IT); DEL PRETE, Antonio, 73014 Gallipoli (LE) (IT); CANNAZZA, Giuseppe, 73010 Veglie (LE) (IT); DE BENEDETTO, Egidio, 73039 Tricase (LE) (IT)
(74) Representative: Bruni, Giovanni
(86) International application number: PCT/IB2015/051397
(87) International publication number: WO 2015/162502

(56) References cited:
- WO-A1-2005/008294
- DE-A1- 10 024 248
- DE-A1-102009 020 208
- GB-A- 2 474 671
- US-A1- 2005 061 198
- US-A1- 2012 192 598
- US-A1- 2013 046 227

## Description

### Technical Field

The present invention relates to a methodology for the identification and traceability of materials during manufacturing processes of products.

In particular, the present invention relates to a methodology for the identification and traceability of leather and leather-like materials throughout the manufacturing process of leather and leather-like products.

### Background Art

The term traceability refers the ability to verify the history, location, or application of an item by means of documented recorded identification [Glossary," ASME Boiler and Pressure Vessel Code, Section III, Article NCA-9000]. In particular, in the manufacturing industry, product traceability indicates following the product, throughout the entire production process. Traceability requires that, at each stage of the production process, new information (*traces*) be created regarding that specific stage. Such traces are collected, stored and associated to each single finished product.

The concept of product identification, which is strictly related to traceability, refers to the possibility of discriminating each single item within a homogeneous lot of similar items, by retrieving all the identification information (regarding the production, transformation, quality status, etc.) of that item.

Traceability and identification are extremely important for manufacturing companies, not only for ensuring safety to the customers (by guaranteeing on the origin of a product or of the raw materials) and comply with regulations, but also for optimizing management and logistics.

Traceability and identification allow to go back to ascertain the characteristics of the product (e.g. constitutive parts and components, production lot, production stages); to reconstruct the information on its the technical/commercial history (e.g. change of property, change of destination); for product recall after the discovery of safety threats (e.g. for the health or for the environment) or *product* defects; etc.

Indeed, product traceability is important for the manufacturing company not only for pursuing customer advocacy policies, but also for logistics and operations management. In fact, for logistics-related purposes, the availability of product-related information is crucial for the optimal management of the numerous production flows that are intrinsically intertwined with the distribution and storage operations.

To allow the identification and the tracing of a product, it is necessary to mark the product, thus making it a uniquely identifiable entity throughout its lifecycle.

There are numerous marking systems and modalities, depending on the specific requirements imposed by the specific application fields and on the nature of the product to be marked. However, in the textile and leather industry, traceability still represents a tough challenge. In fact, in these fields, the production processes are fragmented and include operations that are often delocalized or outsourced. As a result, conventional traceability methods fall short of providing effective solutions.

With regards to the textile industry, marking solutions generally belong to either of the following broad categories:
- marking with tags and/or labels;
- marking through chemical-physical processes.

Tag-based marking solutions are the most widespread: all the necessary identification information are associated to a customized code, which is applied to and carried by each single item that must be traced. Tag-based marking is clearly intended for identifying and tracing specific items which, from the moment of application of the tag, are virtually indivisible (such as clothes). Barcoding is one of the most widespread tag-based marking solutions. A barcode is an optical machine-readable representation of data relating to the object to which it is attached. The barcodes are usually printed directly on the packaging of the item or on a separate label that is attached to the item. Barcodes are read by optical scanners, which allow to associate the code to the corresponding information.

Another widespread tag-based marking technology is radiofrequency identification technology (RFID). An RFID system consists of a reader and of one or more transponders (attached to the item to identify and trace), which transmit a radiofrequency signal in response to an order received by a remote reader station. The response of the transponder consists of an identification code related to the item on which the transponder is applied: the identification code serves as a key to find the item-related information inside a dedicated archive or database. Indeed, RFID transponders are typically equipped with a microchip that, in addition to managing the interaction between transponder and reader station, can also store a limited amount of data.

With regards to tag-based marking, WO 2005/008294A1 discloses a method of identifying an object and a tag carrying identification information: the invention described therein employs magnetic particles or electrically conductive particles as markers. However, said particles are to be deposited on a host medium which, in turn, should be applied to the item to be traced. As a result, if the marked item undergoes severe mechanical, thermal or chemical processes (such as those that are typical of the leather manufacturing process), the persistence of the markers may not be guaranteed.

Similarly, DE102009020208A1 discloses an invention related to a method for coding of products by means of a magnetic composition containing magnetic nanoparticles, and a product having such an encoding. However, also according to this invention, the persistence of the markers may not be guaranteed.

Tag-based marking, however, cannot fully satisfy the requirements of the textile and leather manufacturing industry (in particular, those related to counterfeiting); in fact, the applied tags may be destroyed, damaged or removed when the product undergoes the harsh processes required for leather manufacturing.

As for chemical-physical marking, this represents relatively new technology; and it is still undergoing an intensive research and development stage. Chemical-physical marking is considered as the most suitable technological solution for marking "continuous products", where this expression is used to indicate those products (such as yarn, textiles, and natural fibers), which are used as raw materials and which are bound to undergo particular working processes, still remaining identifiable and traceable.

At the state of the technique, in the textile industry, chemical or optoelectronic marking of fibers is used, including the tracing fiber technique (which, however, is applicable only in the carding process); the employment of heavy metals (with the related negative consequences on the environment); the use of fluorescent or phosphorescent materials (which, however, must not come into contact with bleaching products); and the adoption of nanotechnologies.

At the state of the art are also known the following documents. US 2013/046227 describes various embodiments related to methods, devices, and computer systems utilized for documenting information regarding a subject's health by using a device configured to administer an information mark, said mark comprising one or more magnetic tattoo particles to be injected into the skin of a subject to store information and configured to be read by a health care provider. DE 10024248 describes a similar methodology comprising an identifying device, a reader device, a raster image, a software for implementing the method and a storing device, said methodology consisting in applying a raster image to a human subject (or animal) by means of several printing or painting processes.

However, the aforementioned solutions cannot be applied to the specific needs of the leather manufacturing process.

In general, the first requirement that must be possessed by a methodology for marking leather and leather-like materials is that it must not have a significant effect on the features and characteristics of the finished material: for leather and leather-like materials, it is crucial that the presence of identification markers does not alter the color, touch, thickness and handle characteristics. Also, the presence of identification markers must not affect cutting, gluing, sewing and shaping the material. Overall, the candidate marking technology should not impact substantially the leather manufacturing process.

Additionally, the identification markers must not be visible to the naked eye; identification should be made possible within the factory with simple means. The identification markers should also be resistant to physical, chemical and thermal conditions during the manufacturing operations that are necessary to obtain the finished leather or leather-like products.

As a matter of fact, at the state of the technique, for the manufacturing of leather (to be used, for example, for sofa covers), there is no effective solution for the traceability of the raw materials. This is mostly due to the peculiarity of the raw materials, the hides, which are organic and protein-based and hence subjected to quick degradation.

Additionally, the leather manufacturing process (which consists of three major sub-processes, namely preparatory stages, tanning and crusting) requires the hides to undergo severe mechanical and chemical processes that allow to eliminate components (e.g. subcutaneous tissues, skin and fat, whose presence typically indicate low quality of the product) and to obtain a non-putrescible product, namely leather.

Often, some of the sub-processes, especially tanning, are outsourced or delocalized. The tanning process changes completely the appearance of the obtained leather with respect to the appearance of the raw hide; hence, when the hides are sent to tanning and return to the company, it is crucial to verify that the product that has been sent back in is the same material that had been originally sent out. Based on these considerations, it is clear that, in the leather manufacturing industry, the improvement of authentication systems is vital to guarantee traceability along the chain from the sourcing of raw materials at the abattoir to their use when manufacturing a finished product.

It goes without saying that adopting tag-based traceability systems is practically unfeasible, because, as already mentioned, the tanning process is so severe that tags would be removed or destroyed.

Therefore, it is necessary to define a traceability and identification system of the product along the different steps of the process, so as to identify raw hides and guarantee the identification of the hides throughout the leather manufacturing process. In this way, the manufacturer would be reassured about possible fraudulent substitutions of the raw materials and would avoid being involuntarily led to sell low-quality products.

### Disclosure of Invention

The present invention pertains to a methodology for the identification and traceability of materials in industrial process, with particular focus on the traceability of leather and leather-like materials throughout the manufacturing process of leather or leather-like products. By allowing to keep track of the marked leather or leather-like materials throughout the entire leather manufacturing process, the present invention allows verifying possible fraudulent modifications/substitutions/operations or even honest mistakes in the employment of the materials.

The methodology object of the present invention is implemented by means of at least a marker-embedding device, a plurality of identification markers, a device for generating an electromagnetic stimulus and configured to convey the electromagnetic stimulus to the portion of the material that needs to be analyzed and a device for acquiring/recording the response to the electromagnetic stimulus, said methodology comprising the following steps:
i. embedding permanently the markers in the leather or leather-like material to be traced, by means of said marker-embedding device;
ii. stimulating the leather or leather-like material to be traced with a specific electromagnetic radiation produced by the generating device;
iii. acquiring the response of the marked leather or leather-like material to the electromagnetic stimulus by means of the external device;
iv. recording the response of the marked leather or leather-like material to the electromagnetic stimulus by means of an acquisition unit;
wherein said marker-embedding device is a tattoo-gun;
said identification markers consist of sub-micrometric particles, such as powders of ceramic or metallic particles always not visible to the human eye;
said step (i.) for permanently embedding of the markers comprises embedding the markers at a depth of at least 0.2 mm under the surface of the leather or leather-like material;
said specific electromagnetic radiation produced by the generating device is in the range from X-rays to microwaves in the electromagnetic spectrum.

Said methodology is also characterized in that the marker-embedded portion of the leather or leather-like material responds to an electromagnetic stimulus differently from how a marker-free portion of the same material responds to the same electromagnetic stimulus and also differently from how the same portion of material would respond to the same electromagnetic stimulus if the portion was marker-free.

The identification markers are also characterized in that they are permanently embedded inside the item to traced, following a pre-established pattern or a random distribution.

Said identification markers are also characterized in that they are inert and chemically and thermally stable with respect to the leather and to leather-like materials in which they are embedded; and, therefore, the presence of the markers does not provoke modifications or any other undesired effects (e.g. stiffness, frays, unraveling) that could compromise the subsequent working operations and the final quality of the leather product.

The method for permanently embedding the markers is characterized in that it is non-destructive and only minimally invasive in respect to the material in which the markers are to be embedded; in this way, the integrity of the leather or leather-like material is preserved and the final quality of the product is not compromised.

The method for embedding the markers is characterized in that the markers are permanently embedded under the surface, at a depth that may vary in the range of 0.2 mm to 1.0 mm, depending on the thickness of the material to be marked.

This method for embedding the identification markers makes the markers resistant to thermal, mechanical, chemical, physical processes that are part of leather manufacturing process (such as fleshing, dehairing and trimming). Because the markers are embedded inside (rather than attached on the surface of) the leather or leather-like material, they remain permanently inside the material, in spite of possible reduction of the thickness of the marked material, due to the production process.

The markers are also characterized in that, after the leather manufacturing process is complete, they are invisible to the human eye, as no visible trace is left on the surface of the leather.

### Brief Description of Drawings

Fig. 1 shows a schematization of a marker-embedding device (1) used for embedding the identification markers (3) in the leather or leather-like material (2) to be traced.
Fig. 2 shows a possible way of embedding the identification markers (3) inside the leather or leather-like material (2), wherein an array (4) of marker-embedding devices is used for obtaining a pre-established pattern (5) of identification markers (3).
Fig. 3 shows a simplified schematization of the top-view of a leather or leather-like material (2), with the identification markers (3) are embedded, and a cross-section of the same leather or leather-like material wherein the presence of the identification markers (3) in the sub-surface is shown.
Fig. 4 shows a schematization of a first preferred embodiment of the invention, in which an X-Ray scanning device (6) is employed for scanning the leather or leather-like material (2) in which the identification markers (3) are embedded, thus obtaining an identification X-ray image (7).
Fig. 5 shows a schematization of another non-limiting preferred embodiment of the invention, in which a microwave reflectometer (9) connected to an acquisition/recording unit (10) is used to generate a microwave electromagnetic stimulus that is conveyed through an accessory (8) to the portion of the leather or leather-like material (2) containing the sub-surface identification markers (3).
Fig. 6 shows an example of the response obtained from the realization of the methodology depicted in Fig. 5, wherein the response to the microwave electromagnetic stimulus is the reflection scattering parameter, which is different in presence (11) or in absence (12) of the identification markers.

### Modes for Carrying Out the Invention

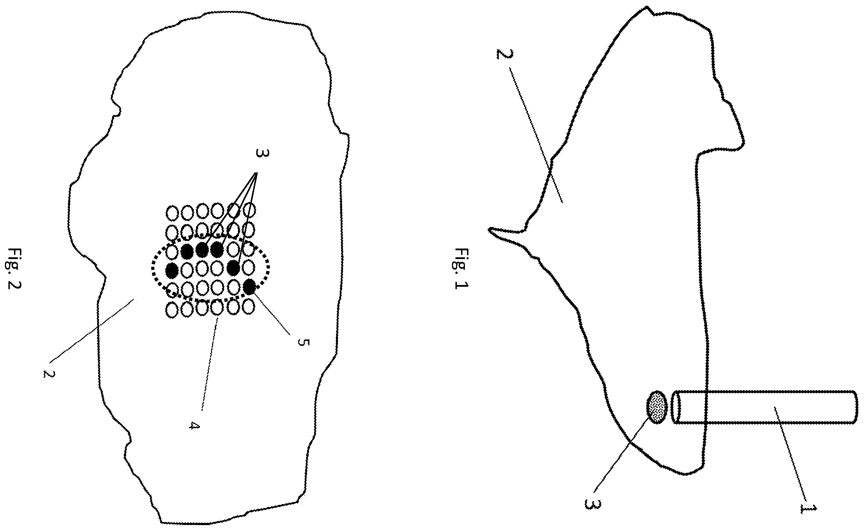

As depicted in Fig. 1, the theoretical principle at the base of the present invention consists in employing a device (1) for embedding the markers in the material to be traced (2), in a limited portion of it (3), a number of tracing markers, such as metallic particles, ceramic powder, or a compounds of different nature. It is possible to embed said markers following a pre-established pattern, or a code, or other type of informative comment, which can be associated to the marked material.

When the object to be traced undergoes processes or is moved, it can be subjected automatically, in one or more steps of the manufacturing process, to a traceability-check, for example through X-ray, thus verifying the presence of the identification markers and, hence, the origin of the product and its authenticity (for example, through the identification of specific shapes or pattern given to the embedded markers).

In one preferred non-limiting embodiment of the invention, the marker-embedding device (1) operates similarly to a tattoo gun. In order to facilitate the penetration of the markers (3), these are dispersed into a vector fluid (such as water or acetone), which is inert with respect to the leather or leather-like materials and which evaporates after the markers (3) have been embedded. The method of embedding the markers makes them resistant to the working processes that the raw materials (e.g. hides) undergo throughout the product manufacturing process (e.g. leather manufacturing process).

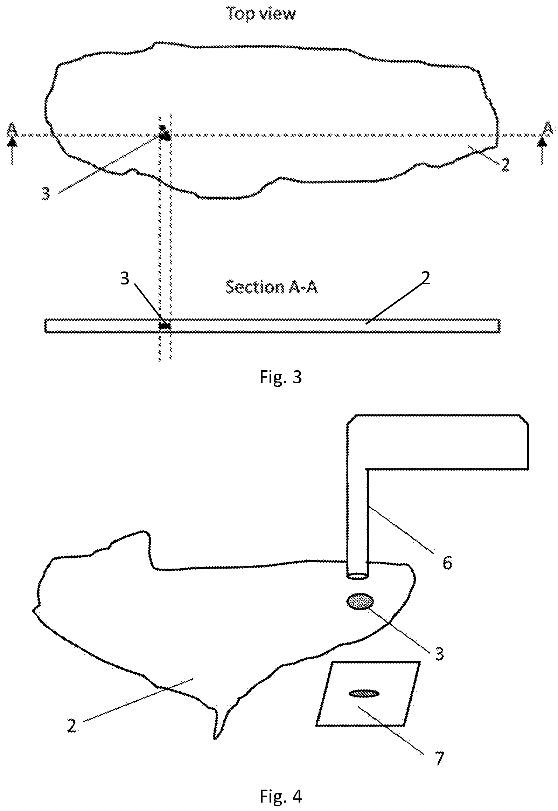

In one non-limiting preferred embodiment of the invention, as shown in fig. 4, the traceability and identification methodology is based on the difference of the response when an electromagnetic stimulus, in the X-ray frequency band, is applied to portions of the leather or leather-like material in which the identification markers (3) are embedded and to portions of leather or leather-like material (2) without the markers. In this embodiment of the invention, the step for stimulating the leather or leather-like material to be traced is performed employing an X-Ray scanning device (6), which conveys X-Rays on the marker-embedded portion (3) of the material (2). The presence of the markers (3) is verified by acquiring the X-ray image (7) of the marked portion of the leather or leather-like material (2).

As shown in Fig. 2, in another non-limiting preferred embodiment of the invention, the markers (3) can be embedded in the item to be traced through a system of multiple injectors, arranged as an array (4). This configuration of the marker-embedding device allows, if necessary, to activate the "injection needles" and extend the portion of the material carrying the markers or, alternatively, to selectively activate the needles that form a pre-established identification pattern (5) which may be associated to specific information related to the item.

In the final leather or leather-like product, the identification markers (3) are always not visible to the human eye.

In one non-limiting preferred embodiment of the present invention, said device (1) for embedding the markers (3) can be a tattoo gun.

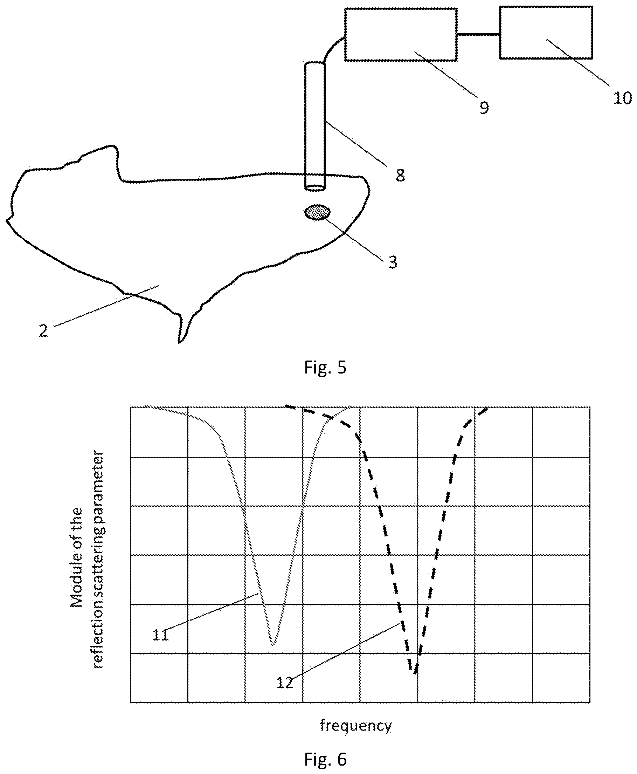

In another non-limiting preferred embodiment of the present invention, shown in Fig. 5, the method for generating the microwave electromagnetic stimulus can resort to a microwave reflectometer (9), which generates the stimulus signal and, through accessories (8), conveys it to the portion of material containing the embedded markers (3). The accessories (8) convey the reflected signal to the microwave reflectometer (9); which, in turn, digitizes the reflected signal and sends it to the acquisition/recording unit (10) for evaluating the corresponding reflection scattering parameter. In this embodiment, the response to the electromagnetic stimulus is the reflection scattering parameter, which behaves differently in presence (11) or in absence (12) of the markers, as shown in Fig. 6. In this preferred embodiment, the identification markers (3) are substances (such as ceramic powders) with a relative dielectric permittivity that is much different from the typical relative dielectric permittivity of leather and leather-like materials.

In another non-limiting preferred embodiment of the present invention, the method for embedding the identification markers resorts to a set of needles that inject the markers in the wetted leather or leather-like material.

## Claims

1. Methodology for the identification and the traceability of leather or leather-like materials (2) throughout the manufacturing process of leather or leather-like products, the methodology being implemented by means of at least a marker-embedding device (1), a plurality of identification markers (3), a device for generating an electromagnetic stimulus (6, 9) and configured to convey the electromagnetic stimulus to the portion of the material that needs to be analyzed and a device for acquiring/recording the response to the electromagnetic stimulus (7, 9, 10),
said methodology comprising the following steps:
i. embedding permanently the markers (3) in the leather or leather-like material (2) to be traced, by means of said marker-embedding device (1);
ii. stimulating the leather or leather-like material (2) to be traced with a specific electromagnetic radiation produced by the generating device (6, 9);
iii. acquiring the response of the marked leather or leather-like material (2) to the electromagnetic stimulus by means of the external device (9, 10);
iv. recording the response of the marked leather or leather-like material to the electromagnetic stimulus by means of an acquisition unit (7,10),
said methodology being **characterized in that**:
said marker-embedding device (1) is a tattoo-gun;
said identification markers (3) consist of sub-micrometric particles,
such as powders of ceramic or metallic particles always not visible to the human eye;
said step (i.) for permanently embedding of the markers (3) comprises embedding the markers (3) at a depth of at least 0.2 mm under the surface of the leather or leather-like material (2);
said specific electromagnetic radiation produced by the generating device (6, 9) is in the range from X-rays to microwaves in the electromagnetic spectrum.

2. Methodology according to claim 1, wherein the step for permanently embedding of the markers (3) by means of a marker-embedding device (1), comprises dispersing the markers (3) in an evaporable/volatile vector fluid that facilitate the embedding process of the markers (3) inside the leather or leather-like material (2) to be traced.

3. Methodology according to claims 1 and 2 wherein said identification markers (3) are embedded by means of a plurality of marker-embedding devices (1), arranged as an array (4), in order to have the markers (3) arranged following a pre-established recognition pattern (5).

4. Methodology according to one of the preceding claims from 1 to 3, wherein:
- the step for stimulating the leather or leather-like material to be traced is performed employing an X-ray device (6) and conveying X-rays on the marker-embedded portion (3) of the material (2);
- the step for acquiring the response of the marked leather or leather-like material is performed by collecting the transmitted X-ray radiation;
- the step for the recording of the response comprises the acquisition of the resulting identification X-ray image (7).

5. Methodology according to one of the preceding claims from 1 to 3, wherein
- the step for stimulating the of leather or leather-like material to be traced is performed employing a device for generating a microwave electromagnetic signal (9) that is conveyed, through accessories (8), to the marker-embedded portion (3) of the material (2);
- the step for acquiring the response of the marked leather or leather-like material (2) is performed by conveying, through the accessories (8), the electromagnetic signal that is reflected by the stimulated portion of the leather or leather-like material (2) and sending it to the microwave reflectometer (9);
- the step for the recording of the response comprises evaluating the reflection scattering parameter (11, 12) resulting from the previous step.

## Patentansprüche

1. Methode zur Identifizierung und Rückverfolgbarkeit von Leder oder lederähnlichen Materialien (2) während des gesamten Herstellungsprozesses von Leder oder lederartigen Produkten, wobei die Methode mittels mindestens einer Marker-Einbettungsvorrichtung (1) durchgeführt wird, einer Vielzahl von Identifikationsmarkern (3), einer Vorrichtung zum Erzeugen eines elektromagnetischen Stimuluses (6, 9) und konfiguriert zum Übertragen des elektromagnetischen Stimuluses zu dem Teil des zu analysierenden Materials und mittels einer Vorrichtung zum Erfassen/Aufzeichnen der Antwort auf das elektromagnetische Stimulus (7, 9, 10),
wobei die besagte Methode folgende Schritte umfasst:
i. dauerhaftes Einbetten der Marker (3) in das zu verfolgende Leder oder lederartige Material (2) mittels der Marker-Einbettvorrichtung (1);
ii. Stimulieren des zu verfolgenden Leders oder lederartigen Materials (2) mit einer spezifischen elektromagnetischen Strahlung, die von der Erzeugungsvorrichtung (6, 9) erzeugt wird;
iii. Erfassen der Reaktion des markierten leder- oder lederartigen Materials (2) auf den elektromagnetischen Stimulus mittels der externen Vorrichtung (9, 10);
iv. Aufnehmen der Reaktion des markierten Leders oder lederartigen Materials auf den elektromagnetischen Stimulus mittels einer Erfassungseinheit (7, 10),
wobei die besagte Methode **dadurch gekennzeichnet ist, dass**:
die besagte Marker-Einbettvorrichtung (1) aus einer Tätowierpistole besteht;
die besagten Identifikationsmarker (3) aus submikrometrischen Partikeln bestehen, wie zum Beispiel Pulvern aus Keramik oder metallischen Partikeln, die für das menschliche Auge immer nicht sichtbar sind;
der besagte Schritt (i.) zum dauerhaften Einbetten der Markierungen (3), das Einbetten der Markierungen (3) in einer Tiefe von mindestens 0,2 mm unter der Oberfläche des leder- oder lederartigen Materials (2) umfasst;
die von der Erzeugungseinrichtung (6, 9) erzeugte spezifische elektromagnetische Strahlung liegt im Bereich von Röntgenstrahlen bis zu Mikrowellen im elektromagnetischen Spektrum.

2. Methode nach Anspruch 1, wobei der Schritt zur dauerhaften Einbettung der Marker (3) mittels einer Marker-Einbettungsvorrichtung (1) das Dispergieren der Marker (3) in einem verdampfbaren/flüchtigen Trägerfluid umfasst, das das Verfahren der Einbettung der Markierungen (3) innerhalb des leder- oder lederartigen Materials (2), das verfolgt werden soll, vereinfacht.

3. Methode nach den Ansprüchen 1 und 2, **dadurch gekennzeichnet, dass** die besagten Identifikationsmarker (3) mittels einer Mehrzahl von als Array (4) angeordneten Marker-Einbettungsvorrichtungen (1) eingebettet sind, um die Marker (3) nach einem vorgegebenen Erkennungsmuster (5) anzuordnen.

4. Methode nach einem der vorhergehenden Ansprüche 1 bis 3, wobei
- der Schritt zum Stimulieren des zu verfolgenden Leders oder lederartigen Materials wird unter Verwendung einer Röntgenvorrichtung (6) durchgeführt und durch die Übertragung auf dem in die Markierung eingebetteten Abschnitt (3) des Materials (2);
- der Schritt zum Erfassen der Antwort des markierten Leders oder lederähnlichen Materials wird durch Sammeln der übertragenen Röntgenstrahlung durchgeführt;
- der Schritt zur Aufzeichnung der Antwort umfasst das Erfassen des resultierenden Identifikations-Röntgenbildes (7).

5. Methode nach einem der vorhergehenden Ansprüche 1 bis 3, wobei
- der Schritt zum Stimulieren des zu verfolgenden Leders oder lederartigen Materials wird unter Verwendung einer Vorrichtung zum Erzeugen eines elektromagnetischen Mikrowellensignals (9) durchgeführt, das durch Zubehörteile (8) zu dem in die Markierung eingebetteten Abschnitt (3) des Materials (2), überträgt wird;
- der Schritt zum Aufnehmen der Antwort des markierten leder- oder lederartigen Materials (2) wird durchgeführt, indem durch das Zubehör (8) das elektromagnetische Signal, das von dem stimulierten Teil des Leders oder des lederartigen Materials reflektiert wird (2), zum Mikrowellen-Reflektometer (9) übertragen wird;
- der Schritt zum Aufzeichnen der Antwort umfasst das Auswerten des aus dem vorherigen Schritt resultierenden Reflexions-Streuparameters (11, 12).

## Revendications

1. Méthodologie d'identification et de traçabilité du cuir ou des matériaux similaires au cuir (2) dans tout le processus de fabrication du cuir ou des produits similaires au cuir, la méthodologie étant mise en oeuvre au moyen d'au moins un dispositif d'inclusion de marqueurs (1), une pluralité de marqueurs d'identification (3), un dispositif pour générer une stimulation électromagnétique (6, 9) et configuré pour transmettre la stimulation électromagnétique à la partie du matériau à analyser et un dispositif pour acquérir/enregistrer la réponse à la stimulation électromagnétique (7, 9, 10),
ladite méthodologie comprenant les étapes suivantes:
i. enrobage permanent des marqueurs (3) dans le cuir ou dans le matériau similaire au cuir (2) à tracer, au moyen dudit dispositif d'enrobage des marqueurs (1);
ii. stimulation du cuir ou du matériau similaire au cuir (2) à tracer avec un rayonnement électromagnétique spécifique produit par le dispositif générateur (6, 9);
iii. acquisition de la réponse du cuir ou du matériau similaire au cuir (2) marqués, à la stimulation électromagnétique au moyen du dispositif externe (9, 10);
iv. enregistrement de la réponse du cuir ou du matériau similaire au cuir marqués à la stimulation électromagnétique au moyen d'une unité d'acquisition (7,10),
ladite méthodologie étant **caractérisée en ce que**:
ledit dispositif d'enrobage des marqueurs (1) est un pistolet de tatouage;
lesdits marqueurs d'identification (3) sont constitués de particules sous-micrométriques, telles que des poudres de particules céramiques ou métalliques toujours invisibles à l'oeil humain;
ladite étape (i) d'enrobage permanent des marqueurs (3) comprend l'enrobage des marqueurs (3) à une profondeur d'au moins 0,2 mm sous la surface du cuir ou du matériau similaire au cuir (2);
ledit rayonnement électromagnétique spécifique produit par le dispositif générateur (6, 9) se situe dans la plage allant des rayons X aux microondes dans le spectre électromagnétique.

2. Méthodologie selon la revendication 1, dans laquelle l'étape d'enrobement permanent des marqueurs (3) au moyen d'un dispositif d'enrobage de marqueurs (1) consiste à disperser les marqueurs (3) dans un fluide vecteur évaporable/volatil facilitant le processus d'enrobage des marqueurs (3) à l'intérieur du cuir ou d'un matériau similaire au cuir (2) à tracer.

3. Méthodologie selon les revendications 1 et 2 dans laquelle lesdits marqueurs d'identification (3) sont enrobés au moyen d'une pluralité de dispositifs d'enrobage des marqueurs (1), agencés sous la forme d'un groupement (4), pour disposer les marqueurs (3) suivant un schéma de reconnaissance préétabli (5).

4. Méthodologie selon l'une des revendications précédentes de 1 à 3, dans laquelle:
- l'étape pour stimuler le cuir ou le matériau similaire au cuir marqués à tracer, est réalisée en utilisant un dispositif à rayons X (6) et en transportant des rayons X sur la partie (3) enrobée des marqueurs du matériau (2) ;
- l'étape d'acquisition de la réponse du cuir ou du matériau similaire au cuir marqués est réalisée en recueillant le rayonnement X transmis;
- l'étape d'enregistrement de la réponse comprend l'acquisition de l'image radiographique d'identification résultante (7) .

5. Méthodologie selon l'une des revendications précédentes de 1 à 3, dans laquelle
- l'étape de stimulation du cuir ou du matériau similaire au cuir à tracer est réalisée en utilisant un dispositif pour générer un signal électromagnétique à microondes (9) qui est transporté, à travers des accessoires (8), à la partie enrobée dans les marqueurs (3) du matériau (2);
- l'étape d'acquisition de la réponse du cuir ou du matériau similaire au cuir (2) marqués est réalisée en transportant, à travers les accessoires (8), le signal électromagnétique réfléchi par la partie stimulée du cuir ou du matériau similaire au cuir (2) et en l'envoyant au réflectomètre à microondes (9);
- l'étape d'enregistrement de la réponse comprend l'évaluation du paramètre de diffusion de réflexion (11, 12) résultant de l'étape précédente.
